# FASCICULE DE BREVET EUROPEEN

(11) **EP 3 797 242 B1**
(45) Date de publication et mention de la délivrance du brevet: **17.08.2022**
(21) Numéro de dépôt: 19732717.4
(22) Date de dépôt: 09.05.2019
(51) Int. Cl.: F21S 43/14, F21S 43/241, F21S 43/243, F21V 8/00, F21S 43/27

(54) **GUIDE DE LUMIÈRE DE BLOC OPTIQUE, À EXTRÉMITÉ ARRIÈRE À PATTES DE FIXATION PARTICIPANT À LA RÉFLEXION DE PHOTONS**
LICHTLEITER FÜR OPTISCHE EINHEIT MIT RÜCKSEITIGEM ENDE MIT AN DER PHOTONENREFLEXION BETEILIGTEN BEFESTIGUNGSLASCHEN
OPTICAL UNIT LIGHT GUIDE, WITH REAR END HAVING ATTACHMENT TABS PARTICIPATING IN PHOTON REFLECTION

(30) Priorité: 23.05.2018 FR 1854266
(43) Date de publication de la demande: 31.03.2021
(73) Titulaire: PSA Automobiles SA, 78300 Poissy (FR)
(72) Inventeur: ROYER, Guillaume, 91680 BRUYERES LE CHATEL (FR); SCHNURIGER, Damien, 91300 MASSY (FR)
(86) Numéro de dépôt international: PCT/FR2019/051055
(87) Numéro de publication internationale: WO 2019/224449

(56) Documents cités:
- EP-A1- 3 354 977
- EP-A1- 3 372 892
- WO-A1-2017/168387
- CN-A- 103 836 482
- DE-A1-102011 090 197
- FR-A1- 2 967 235
- FR-A1- 2 995 977
- FR-A1- 3 035 182
- JP-A- 2014 154 524
- TW-U- M 551 987
- US-A1- 2012 218 772

## Description

L'invention concerne les guides de lumière qui sont destinés à équiper des blocs optiques, éventuellement de véhicules, afin de participer à au moins une fonction photométrique.

Certains blocs optiques, généralement destinés à équiper des véhicules, éventuellement automobile, comprennent au moins un guide de lumière logé dans un espace interne délimité par un boîtier ayant une partie avant à laquelle est solidarisée fixement une glace. Ce guide de lumière comprend une partie centrale située entre des extrémités arrière et avant. L'extrémité arrière comporte une zone d'entrée alimentée en photons par au moins une source de photons et présentant une forme et une surface externe qui induisent au moins une réflexion totale interne des photons ayant pénétré par cette zone d'entrée vers cette partie centrale. L'extrémité avant délivre des photons qui ont été guidés par la partie centrale et qui participent à au moins une fonction photométrique. Les demandes de brevet EP3354977A1 et EP3372892-A1, qui appartiennent à l'état de la technique selon l'article 54(3) CBE, montrent des guides de lumière propres à assurer des fonctions photométriques.

Un tel guide de lumière est généralement solidarisé à la face interne du boîtier de son bloc optique ou bien à une carte électronique comprenant les sources de photons et solidarisée à cette face interne. Lorsque cette solidarisation doit être fixe et précise, le guide de lumière est solidarisé par au moins une pièce additionnelle et/ou par au moins deux vis qui le traversent dans des zones qui ne doivent pas perturber la propagation des photons vers son extrémité avant, ce qui s'avère contraignant. Dans certains cas, cette contrainte peut s'avérer impossible à respecter, ce qui nuit à l'homogénéité de la fonction photométrique à laquelle participe le guide de lumière. C'est notamment le cas lorsque la face avant, qui termine l'extrémité avant du guide de lumière et par laquelle sortent les photons guidés, doit présenter une forme complexe en raison du style choisi et/ou de la forme de l'élément auquel est solidarisé le bloc optique (comme par exemple une porte (ou un volet) de coffre arrière ou une aile arrière).

L'invention a notamment pour but d'améliorer la situation.

Elle propose notamment à cet effet un guide de lumière destiné à équiper un bloc optique et comportant une partie centrale située entre une extrémité arrière, comportant une zone d'entrée alimentée en photons par au moins une source de photons et présentant une forme et une surface externe induisant au moins une réflexion totale interne des photons ayant pénétré par cette zone d'entrée vers cette partie centrale, et une extrémité avant, délivrant des photons guidés par la partie centrale et participant à au moins une fonction photométrique.

Ce guide de lumière se caractérise par le fait que son extrémité arrière comprend deux pattes de fixation qui la prolongent vers l'arrière et comportent chacune un trou traversant délimité par une paroi ayant une partie présentant une forme et une surface externe induisant au moins une réflexion totale interne vers sa partie centrale des photons qui la rejoignent afin qu'ils participent à la fonction photométrique et par le fait que les pattes de fixation sont définies au niveau de deux coins opposés de son extrémité arrière.

Ainsi, on peut désormais déporter les points de fixation du guide de lumière afin de ne pas perturber la propagation des photons vers la partie centrale, après réflexion, tout en définissant des réflecteurs additionnels qui participent à la réflexion et donc permettent d'avoir une fonction photométrique homogène.

Le guide de lumière selon l'invention peut comporter d'autres caractéristiques qui peuvent être prises séparément ou en combinaison, et notamment :
- chaque patte de fixation peut comprendre une partie terminale opposée à son extrémité arrière et munie d'un autre trou traversant destiné à être traversé par une vis participant à sa fixation à un boîtier ou une carte électronique du bloc optique ;
- il peut constituer une pièce monobloc réalisée par moulage ;
- la fonction photométrique peut être choisie parmi une fonction de feu de recul, une fonction de feu de stop et une fonction d'indicateur de changement de direction.

L'invention propose également un bloc optique comprenant un boîtier délimitant un espace interne logeant au moins une source de photons, et une glace solidarisée fixement à une partie avant du boîtier, et au moins un guide de lumière du type de celui présenté ci-avant, installé dans l'espace interne et alimenté en photons par cette (ces) source(s) de photons.

Par exemple, il peut comprendre une carte électronique sur laquelle est installée la (chaque) source de photons.

Egalement par exemple, la (chaque) source de photons peut comprendre au moins une diode électroluminescente (ou LED).

Egalement par exemple, il peut constituer un feu arrière d'un véhicule.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre de façon schématique et fonctionnelle, dans une vue en perspective, une partie d'un exemple de bloc optique équipé d'un guide de lumière selon l'invention, et
- la figure 2 illustre de façon schématique et fonctionnelle, dans une vue en perspective, un exemple de réalisation d'un guide de lumière selon l'invention.

L'invention a notamment pour but de proposer un guide de lumière GL destiné à équiper un bloc optique BO afin de participer à au moins une fonction photométrique, et comportant de façon intégrante ses propres pattes de fixation.

Dans ce qui suit, on considère, à titre d'exemple non limitatif, que le bloc optique BO est destiné à équiper un véhicule automobile. Mais l'invention n'est pas limitée à cette application. En effet le bloc optique BO peut équiper tout appareil, système, installation ou bâtiment, et notamment tout véhicule (terrestre, maritime (ou fluvial), ou aérien) devant assurer au moins une fonction photométrique.

Par ailleurs, on considère dans ce qui suit, à titre d'exemple non limitatif, que le bloc optique BO est un feu arrière. Par exemple, ce feu arrière peut équiper une partie d'un hayon arrière ou d'une porte de coffre arrière ou d'une aile arrière de véhicule. Mais le bloc optique pourrait également être un feu avant de signalisation ou un phare d'éclairage et de signalisation.

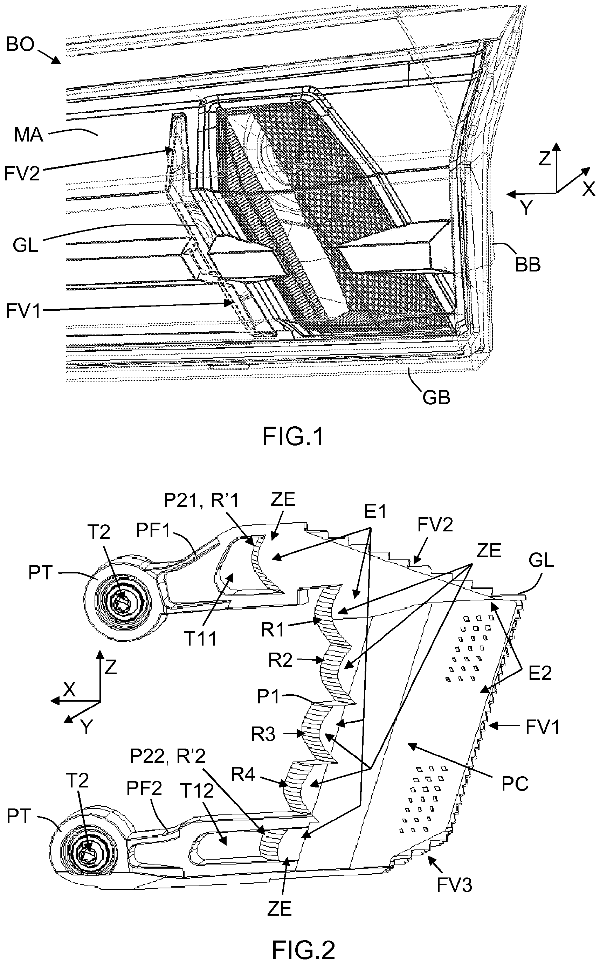

Sur les figures 1 et 2, la direction X est la direction longitudinale du véhicule, laquelle est parallèle aux côtés latéraux comportant les portières latérales, la direction Y est la direction transversale du véhicule, laquelle est perpendiculaire aux côtés latéraux et à la direction longitudinale X, et la direction Z est la direction verticale du véhicule, laquelle est perpendiculaire aux directions longitudinale X et transversale Y.

On a schématiquement illustré sur la figure 1 une partie d'un exemple de bloc optique BO (ici un feu arrière) équipé d'un guide de lumière GL selon l'invention.

Bien que cela n'apparaisse que très partiellement sur la figure 1 le bloc optique BO comprend un boîtier BB délimitant un espace interne logeant notamment au moins un guide de lumière GL, au moins une source de photons et un masque MA, et une glace GB solidarisée fixement à une partie avant du boîtier BB.

La glace GB est solidarisée fixement (par exemple par collage ou soudage) et de façon étanche à la partie avant du boîtier BB. Elle peut être réalisée en matière plastique (ou synthétique) transparente ou bien en verre, et peut être éventuellement colorée au moins en partie, par exemple en rouge ou en orange.

La (chaque) source de photons devant alimenter le guide de lumière GL peut être installée sur une carte électronique qui est logée dans l'espace interne du bloc optique BO. Cette carte électronique peut, par exemple, être une carte à circuits imprimés de type PCB (« Printed Circuit Board »).

Par exemple, la (chaque) source de photons peut comporter au moins une diode électroluminescente (ou LED). En variante, la (chaque) source de photons peut comporter au moins une diode laser ou un laser à gaz ou encore une lampe (ou ampoule).

Comme illustré sur la figure 2, un guide de lumière GL selon l'invention comprend une extrémité arrière E1 alimentée en photons par au moins une source de photons, une extrémité avant E2 opposée à l'extrémité arrière E1, et une partie centrale PC intercalée entre les extrémités arrière E1 et avant E2.

L'extrémité arrière E1 du guide de lumière GL comprend une zone d'entrée ZE qui est alimentée en photons par au moins une source de photons, ici par l'arrière du dessin. Cette zone d'entrée ZE comprend une première paroi P1 qui présente une forme et une surface externe qui sont agencées de manière à induire au moins une réflexion totale interne des photons ayant pénétré par la zone d'entrée ZE vers la partie centrale PC. Cette première paroi P1 définit donc au moins un réflecteur Rk.

On notera que dans l'exemple illustré non limitativement sur la figure 2 la première paroi P1 définit quatre réflecteurs R1 à R4 (k = 1 à 4). Mais elle peut définir n'importe quel nombre de réflecteurs Rk, dès lors que ce nombre est supérieur ou égal à un (1). On notera également que chaque réflecteur Rk peut éventuellement être associé à sa propre source de photons. Mais cela n'est pas obligatoire. En effet, une même source de photons peut éventuellement alimenter plusieurs (au moins deux) réflecteurs Rk, ou bien un réflecteur Rk peut éventuellement être alimenté par plusieurs (au moins deux) sources de photons.

L'extrémité avant E2 du guide de lumière GL est agencée de manière à délivrer sur une face avant FVm des photons qui ont été guidés par la partie centrale PC et qui participent à au moins une fonction photométrique.

Dans le cas d'un véhicule la fonction photométrique peut, par exemple, être une fonction de feu de recul ou une fonction de feu de stop ou encore une fonction d'indicateur de changement de direction (ou clignotant).

Dans l'exemple illustré non limitativement sur la figure 1, seule l'extrémité avant E2 du guide de lumière GL est visible de l'extérieur du bloc optique BO, du fait qu'elle est située juste devant une ouverture définie dans le masque MA et traversée par la partie centrale PC du guide de lumière GL. De plus, dans l'exemple illustré non limitativement sur la figure 1 le guide de lumière GL est installé dans un plan qui est sensiblement vertical. Mais dans des variantes de réalisation il pourrait être installé dans un plan qui est incliné par rapport au plan vertical, voire dans un plan horizontal XY.

L'extrémité arrière E1 du guide de lumière GL comprend en outre deux pattes de fixation PFj (j = 1 ou 2) qui sont destinées à assurer la solidarisation fixe et précise du guide de lumière GL à la face interne du boîtier BB ou à l'éventuelle carte électronique comprenant les sources de photons et solidarisée à cette face interne.

Ces pattes de fixation PFj prolongent l'extrémité arrière E1 vers l'arrière et donc à l'opposé de l'extrémité avant E2. De plus, chaque patte de fixation PFj comprend un trou traversant T1j qui est délimité par une seconde paroi ayant une partie P2j présentant une forme et une surface externe qui induisent au moins une réflexion totale interne vers la partie centrale PC des photons qui la rejoignent afin qu'ils participent à la fonction photométrique du guide de lumière GL. En d'autres termes, chaque partie P2j définit un réflecteur R'j. On notera que chaque réflecteur R'j peut éventuellement être associé à sa propre source de photons. Mais cela n'est pas obligatoire. En effet, il pourrait être associé une source de photons qui est aussi associée à l'un au moins des réflecteurs Rk de la première paroi P1.

Grâce à ces pattes de fixation PFj, il est désormais possible de déporter les points de fixation du guide de lumière GL afin de ne pas perturber la propagation des photons vers la partie centrale PC, après réflexion. En outre, ces pattes de fixation PFj définissant chacune un réflecteur R'j, elles participent très avantageusement à la réflexion et donc permettent d'avoir une fonction photométrique homogène sur l'intégralité de la face avant FVm de l'extrémité avant E2, y compris lorsque cette dernière (FVm) présente une forme complexe en raison du style choisi et/ou de la forme de l'élément auquel est solidarisé le bloc optique BO.

De préférence, le guide de lumière GL constitue une pièce monobloc réalisée par moulage. Ainsi, il peut, par exemple, être réalisé par moulage d'une matière telle que le polycarbonate (ou PC) ou le poly-méthacrylate de méthyle (ou PMMA). Il est par ailleurs préférentiellement de type dit « plat » (ou « flat guide »).

On notera que dans l'exemple illustré non limitativement sur la figure 2 la face avant FVm de l'extrémité avant E2 est subdivisée en trois sous-parties FV1 à FV3 (m = 1 à 3). Une première sous-partie FV1 (m = 1) est orientée vers la zone qui est située derrière le véhicule en étant légèrement inclinée vers le bas. Une deuxième sous-partie FV2 (m = 2) prolonge la première sous-partie FV1 vers le haut et est orientée vers la zone qui est située au-dessus du véhicule en étant légèrement inclinée vers la zone située derrière. Une troisième sous-partie FV3 (m = 3) prolonge la première sous-partie FV1 vers le bas et est orientée vers la zone qui est située au-dessous du véhicule en étant légèrement inclinée vers la zone située derrière. Dans ce cas, au moins les quatre réflecteurs « centraux » Rk réfléchissent des photons vers la première sous-partie FV1, au moins le premier réflecteur « d'extrémité (ici supérieure) » R'1 et le premier réflecteur central R1 réfléchissent des photons vers la deuxième sous-partie FV2, et au moins le second réflecteur d'extrémité (ici inférieure) R'2 et le quatrième réflecteur central R4 réfléchissent des photons vers la troisième sous-partie FV3.

Mais la face avant de l'extrémité avant E2 pourrait ne pas être subdivisée en sous-parties (et par exemple ne comprendre que la première sous-partie FV1, ou bien pourrait être subdivisée en seulement deux sous-parties ou plus de trois sous-parties.

On notera également que dans l'exemple illustré non limitativement sur la figure 2 les pattes de fixation PFj peuvent être définies au niveau de deux coins opposés de l'extrémité arrière E1. Cela favorise la stabilité et l'isostatisme du guide de lumière GL par rapport au boîtier BB, ici dans un plan sensiblement vertical (à titre d'exemple). Mais cela n'est pas obligatoire. En effet, les deux pattes de fixation PFj pourraient être plus proches l'une de l'autre que ce qui est illustré non limitativement, l'une au moins n'étant alors pas définie dans un coin de l'extrémité arrière E1.

Par exemple, et comme illustré non limitativement sur la figure 2, chaque patte de fixation PFj peut comprendre une partie terminale PT qui est opposée à son extrémité arrière E1 et qui est munie d'un autre trou traversant T2 destiné à être traversé par une vis participant à sa fixation au boîtier BB ou à la (une) carte électronique du bloc optique BO. Ces autres trous traversants T2 peuvent être éventuellement filetés.

La longueur des pattes de fixation PFj peut varier en fonction des besoins. Par ailleurs, les pattes de fixation PFj peuvent présenter des longueurs et/ou des formes différentes ou identiques selon les besoins.

On notera également, comme illustré non limitativement sur la figure 2, que l'une au moins des sous-parties FVm de la face avant peut présenter des structures tridimensionnelles, par exemple pour induire une diffusion ou privilégier une direction préférentielle de sortie des photons.

Par exemple, ces structures tridimensionnelles peuvent être des prismes ou des rainures ou des nervures ou encore des godrons (semicylindres circulaires), notamment.

Par ailleurs, et comme illustré non limitativement sur la figure 2, les structures tridimensionnelles peuvent éventuellement varier en forme et/ou en périodicité d'une sous-partie FVm à une autre sous-partie FVm'.

Ces structures tridimensionnelles sont préférentiellement définies lors du moulage du guide de lumière GL. Mais elles pourraient aussi être définies lors d'une étape additionnelle comprenant, par exemple, une attaque laser ou chimique, ou une tampographie.

L'invention offre plusieurs avantages, parmi lesquels :
- elle permet d'obtenir une fonction photométrique homogène,
- elle permet de respecter le style,
- elle permet de conférer un aspect moderne et technique au bloc optique,
- elle permet de valoriser la signature lumineuse,
- elle permet un gain de masse,
- elle permet une réduction des coûts du fait qu'il n'y a pas de pièce supplémentaire à prévoir pour visser le guide de lumière dans la partie technique du bloc optique.

## Revendications

1. Guide de lumière (GL) pour un bloc optique (BO), ledit guide de lumière (GL) comportant une partie centrale (PC) située entre une extrémité arrière (E1), comportant une zone d'entrée (ZE) alimentée en photons par au moins une source de photons et présentant une forme et une surface externe induisant au moins une réflexion totale interne desdits photons ayant pénétré par ladite zone d'entrée (ZE) vers ladite partie centrale (PC), et une extrémité avant (E2) délivrant des photons guidés par ladite partie centrale (PC) et participant à au moins une fonction photométrique, ladite extrémité arrière (E₁) comprenant deux pattes de fixation (PFj) la prolongeant vers l'arrière et comportant chacune un trou traversant (T1j) délimité par une paroi ayant une partie (P2j) présentant une forme et une surface externe induisant au moins une réflexion totale interne vers ladite partie centrale (PC) des photons qui la rejoignent afin qu'ils participent à ladite fonction photométrique, lesdites pattes de fixation (PFj) étant définies au niveau de deux coins opposés de ladite extrémité arrière (E1).

2. Guide de lumière selon la revendication 1, **caractérisé en ce que** chaque patte de fixation (PFj) comprend une partie terminale (PT) opposée à ladite extrémité arrière (E1) et munie d'un autre trou traversant (T2) destiné à être traversé par une vis participant à sa fixation à un boîtier (BB) ou une carte électronique dudit bloc optique (BO).

3. Guide de lumière selon l'une des revendications 1 à 2, **caractérisé en ce qu'**il constitue une pièce monobloc réalisée par moulage.

4. Guide de lumière selon l'une des revendications 1 à 3, **caractérisé en ce que** ladite fonction photométrique est choisie parmi une fonction de feu de recul, une fonction de feu de stop et une fonction d'indicateur de changement de direction.

5. Bloc optique (BO) comprenant un boîtier (BB) délimitant un espace interne logeant au moins une source de photons, et une glace (GB) solidarisée fixement à une partie avant dudit boîtier (BB), **caractérisé en ce qu'**il comprend en outre au moins un guide de lumière (GL) selon l'une des revendications précédentes, installé dans ledit espace interne et alimenté en photons par ladite source de photons.

6. Bloc optique selon la revendication 5, **caractérisé en ce qu'**il comprend une carte électronique sur laquelle est installée ladite source de photons.

7. Bloc optique selon la revendication 5 ou 6, **caractérisé en ce que** ladite source de photons comprend au moins une diode électroluminescente.

8. Bloc optique selon l'une des revendications 5 à 7, **caractérisé en ce qu'**il constitue un feu arrière d'un véhicule.

9. Véhicule, **caractérisé en ce qu'**il comprend au moins un bloc optique selon l'une des revendications 5 à 8.

## Patentansprüche

1. Lichtleiter (GL) für einen optischen Block (BO), wobei der Lichtleiter (GL) einen zentralen Teil (PC) umfasst, der sich zwischen einem hinteren Ende (E1) befindet, mit einem Eingangsbereich (ZE), der von mindestens einer Photonenquelle mit Photonen versorgt wird und eine Form und eine Außenfläche aufweist, die mindestens eine innere Totalreflexion der Photonen, die durch den Eingangsbereich (ZE) in den Mittelteil (PC) eingedrungen sind, induziert, und einem vorderen Ende (E2), das Photonen abgibt, die von dem Mittelteil (PC) geleitet werden und an mindestens einer photometrischen Funktion beteiligt sind, wobei das hintere Ende (E1) zwei Befestigungslaschen (PFj) umfasst, die es nach hinten verlängern und jeweils ein Durchgangsloch (T1j) aufweisen, das von einer Wand begrenzt wird, die einen Abschnitt (P2j) mit einer Form und einer Außenfläche aufweist, die mindestens eine interne Totalreflexion der Photonen, die sie erreichen, in Richtung des Mittelteils (PC) induzieren, damit sie an der photometrischen Funktion teilnehmen, wobei die Befestigungslaschen (PFj) an zwei gegenüberliegenden Ecken des hinteren Endes (E1) definiert sind.

2. Lichtleiter nach Anspruch 1, **dadurch gekennzeichnet, dass** jede Befestigungslasche (PFj) einen Endabschnitt (PT) umfasst, der dem hinteren Ende (E1) gegenüberliegt und mit einem weiteren Durchgangsloch (T2) versehen ist, das dazu bestimmt ist, von einer Schraube durchquert zu werden, die an seiner Befestigung an einem Gehäuse (BB) oder einer elektronischen Karte des optischen Blocks (BO) teilnimmt.

3. Lichtleiter nach einem der Ansprüche 1 bis 2, **dadurch gekennzeichnet, dass** er ein einteiliges, durch Gießen hergestelltes Teil darstellt.

4. Lichtleiter nach einem der Ansprüche 1 bis 3, **dadurch gekennzeichnet, dass** die photometrische Funktion aus einer Rückfahrlichtfunktion, einer Bremslichtfunktion und einer Richtungsänderungsanzeigefunktion ausgewählt ist.

5. Optische Einheit (BO) mit einem Gehäuse (BB), das einen Innenraum begrenzt, in dem mindestens eine Photonenquelle untergebracht ist, und einer Streuscheibe (GB), die fest mit einem vorderen Teil des Gehäuses (BB) verbunden ist, **dadurch gekennzeichnet, dass** sie außerdem mindestens einen Lichtleiter (GL) nach einem der vorhergehenden Ansprüche umfasst, der in dem Innenraum installiert ist und von der Photonenquelle mit Photonen versorgt wird.

6. Optischer Block nach Anspruch 5, **dadurch gekennzeichnet, dass** er eine elektronische Platine umfasst, auf der die Photonenquelle installiert ist.

7. Optischer Block nach Anspruch 5 oder 6, **dadurch gekennzeichnet, dass** die Photonenquelle mindestens eine lichtemittierende Diode umfasst.

8. Optischer Block nach einem der Ansprüche 5 bis 7, **dadurch gekennzeichnet, dass** er eine Rückleuchte eines Fahrzeugs bildet.

9. Fahrzeug, **dadurch gekennzeichnet, dass** es mindestens eine optische Einheit nach einem der Ansprüche 5 bis 8 umfasst.

## Claims

1. Light guide (GL) for an optical block (BO), said light guide (GL) comprising a central portion (PC) located between a rear end (E1) comprising an input zone (ZE) supplied with photons by at least one photon source and having a shape and an external surface inducing at least a total internal reflection of said photons having penetrated through said input zone (ZE) towards said central part (PC), and a front end (E2) delivering photons guided by said central part (PC) and participating in at least one photometric function said rear end (E1) comprising two fixing tabs (PFj) extending it backwards and each comprising a through hole (T1j) delimited by a wall having a portion (P2j) with a shape and an external surface inducing at least a total internal reflection towards said central portion (PC) of the photons which reach it so that they participate in said photometric function, said fixing tabs (PFj) being defined at two opposite corners of said rear end (E1).

2. Light guide according to claim 1, **characterized in that** each fixing tab (PFj) comprises a terminal portion (PT) opposite to said rear end (E1) and provided with another through hole (T2) intended to be passed through by a screw participating in its fixing to a housing (BB) or an electronic board of said optical block (BO).

3. Light guide according to one of claims 1 to 2, **characterized in that** it constitutes a one-piece part made by molding.

4. Light guide according to one of claims 1 to 3, **characterized in that** said photometric function is chosen from a reversing light function, a stop light function and a turn indicator function.

5. Optical unit (BO) comprising a housing (BB) delimiting an internal space housing at least one photon source, and a lens (GB) fixedly attached to a front part of the said housing (BB), **characterized in that** it also comprises at least one light guide (GL) according to one of the preceding claims, installed in the said internal space and supplied with photons by the said photon source.

6. Optical block according to claim 5, **characterized in that** it comprises an electronic board on which said photon source is installed.

7. The optical block according to claim 5 or 6, **characterized in that** said photon source comprises at least one light emitting diode.

8. An optical block according to any of claims 5 to 7, **characterized in that** it constitutes a rear light of a vehicle.

9. Vehicle, **characterized in that** it comprises at least one optical block according to one of claims 5 to 8.
